# EUROPÄISCHE PATENTSCHRIFT

(11) **EP 2 576 134 B1**
(45) Veröffentlichungstag und Bekanntmachung des Hinweises auf die Patenterteilung: **28.05.2014**
(21) Anmeldenummer: 11720045.1
(22) Anmeldetag: 17.05.2011
(51) Int. Cl.: B23Q 5/02, B23Q 16/02, B23B 29/00

(54) **WERKZEUGREVOLVER**
TOOL TURRET
TOURELLE REVOLVER

(30) Priorität: 28.05.2010 DE 102010021948; 28.05.2010 DE 102010021949
(43) Veröffentlichungstag der Anmeldung: 10.04.2013
(73) Patentinhaber: Sauter Feinmechanik GmbH, 72555 Metzingen (DE)
(72) Erfinder: STIEFEL, Jürgen, 72664 Kohlberg (DE); LINDER, Dietmar, 72581 Dettingen (DE); SCHIPS, Günther, 72793 Pfullingen (DE)
(74) Vertreter: Bartels, Martin Erich Arthur
(86) Internationale Anmeldenummer: PCT/EP2011/002429
(87) Internationale Veröffentlichungsnummer: WO 2011/147544

(56) Entgegenhaltungen:
- EP-A1- 0 732 171
- WO-A1-03/000459
- US-B1- 7 475 463

## Beschreibung

Die Erfindung betrifft einen Werkzeugrevolver mit einer Werkzeugscheibe, die um eine eine Schwenkachse definierende Trägersäule in Positionen schwenkbar ist, in denen mindestens ein an der Werkzeugscheibe festlegbares Bearbeitungswerkzeug in einer Bearbeitungsposition ist, mit einer Antriebseinrichtung, deren Antriebsmittel über eine ansteuerbare Koppeleinrichtung mit Abtriebsmitteln verbindbar sind, die dem Antrieb der Werkzeugscheibe oder des Bearbeitungswerkzeuges dienen.

Derartige Werkzeugrevolver kommen in der industriellen Fertigung insbesondere dann zum Einsatz, wenn mittels einer gemeinsamen Antriebseinrichtung neben einem Verschwenken der Werkzeugscheibe zur Auswahl des für einen aktuellen Bearbeitungsvorgang benötigten Bearbeitungswerkzeuges auch der Antrieb eines rotierenden Bearbeitungswerkzeuges realisiert werden soll.

Aus der US 7,475,463 B1 ist es bei einer spanenden Werkzeugmaschine bekannt, eine gemeinsame Antriebseinrichtung wahlweise zum Antrieb einer Werkzeugscheibe oder eines rotierenden Bearbeitungswerkzeuges, welches über eine Halteeinrichtung an der Werkzeugscheibe angebracht ist, einzusetzen. So ist bei der bekannten Lösung vorgesehen, eine durch die Antriebseinrichtung angetriebene und mit zwei Antriebsmitteln in Form von axial gegeneinander versetzt angeordneten Verzahnungen versehene Welle zwecks dem wahlweisen Antrieb der Werkzeugscheibe oder des Bearbeitungswerkzeuges in eine erste bzw. zweite axiale Position zu verschieben. In der ersten axialen Position der Welle sind erste Antriebsmittel der Welle von ersten Abtriebsmitteln zum Antrieb des Bearbeitungswerkzeuges entkoppelt, und zweite Antriebsmittel in Form einer Außenverzahnung sind in Eingriff mit einem Abtriebsmittel, über welches ein Verschwenken der Werkzeugscheibe bewirkt werden kann. In einer zweiten axialen Position der Welle gelangen die zum Antrieb des Bearbeitungswerkzeuges an der Welle vorgesehenen ersten Antriebsmittel in Eingriff mit den Antriebsmitteln zum Antrieb des Bearbeitungswerkzeuges, so dass dieses in eine rotatorische Bewegung versetzt werden kann. Die bekannte Lösung baut relativ groß auf, was in ungünstiger Weise die Einsatzmöglichkeiten des Werkzeugrevolvers stark einschränkt.

Ausgehend von diesem Stand der Technik stellt sich die Erfindung die Aufgabe, einen Werkzeugrevolver zur Verfügung zu stellen, der sich durch eine einfache, kompakte und zuverlässige Bauweise auszeichnet, die bei ihrem Betrieb den in der industriellen Fertigung geforderten geringen Fertigungstoleranzen gerecht wird.

Erfindungsgemäß ist diese Aufgabe durch einen Werkzeugrevolver gelöst, der die Merkmale des Patentanspruches 1 in seiner Gesamtheit aufweist.

Dadurch, dass gemäß dem kennzeichnenden Teil des Patentanspruches 1 die Antriebseinrichtung zusammen mit den Antriebsmitteln und den dem Antrieb des Bearbeitungswerkzeuges dienenden Abtriebsmitteln innerhalb der Werkzeugscheibe angeordnet ist, während die dem Schwenkantrieb der Werkzeugscheibe dienenden Abtriebsmittel eine außerhalb der Werkzeugscheibe an der Trägersäule gelegene Getriebeanordnung mit einer sich entlang der Trägersäule erstreckenden Abtriebswelle aufweisen, ist ein besonders kompakter Aufbau des Gesamtsystems des Werkzeugrevolvers, bestehend aus Werkzeugscheibe und Trägersäule, erreicht. Dadurch dass die Abtriebsmittel für den Schwenkantrieb der Werkzeugscheibe mit Getriebeanordnung und Abtriebswelle außerhalb der Werkzeugscheibe an der Trägersäule zugeordnet sind, lässt sich die Werkzeugscheibe besonders kompakt gestalten, obwohl in ihr ein gemeinsamer Antrieb für Schwenkbewegungen und den Antrieb eines Rotationswerkzeuges untergebracht sind, wobei letzterer sozusagen als Direktantrieb des Bearbeitungswerkzeuges dient, während der Schwenkantrieb an die Trägersäule verlagert ist, wodurch wiederum die Masse der Werkzeugscheibe selbst nicht durch die Masse der Getriebeanordnung des Schwenkantriebes belastet wird.

In besonders vorteilhafter Weise kann die Getriebeanordnung ein Wolfrom-Planetengetriebe aufweisen. Da Wolfrom-Planetengetriebe ein sehr hohes Untersetzungsverhältnis bei kleinstem Raumbedarf gewährleisten wird auch seitens der Trägersäule nur ein geringer Bauraum benötigt, um die verhältnismäßig hohe Drehzahl der Antriebswelle der Antriebseinrichtung, wie sie für einen Direktantrieb des Bearbeitungswerkzeuges erforderlich ist, in die demgegenüber geringe Drehzahl der für den Schwenkantrieb vorgesehenen Abtriebswelle umzusetzen.

Bei von einer gemeinsamen Antriebswelle der Antriebseinrichtung antreibbaren Antriebsmitteln kann die Koppeleinrichtung für das wahlweise Koppeln mit den Antriebsmitteln für den Schwenkantrieb und den Antrieb des Bearbeitungswerkzeuges durch eine Betätigungseinrichtung ansteuerbar sein, mittels deren das jeweilige Antriebsmittel koaxial zur Antriebswelle der Antriebseinrichtung oder parallel zu dieser verschiebbar ist. Durch eine koaxial verschiebbare Anordnung des jeweiligen Antriebsmittels zu der Antriebswelle wird zum einen ein möglichst geringer Bauraum beansprucht, darüber hinaus ergibt sich durch die koaxiale Anordnung ein spielfreier direkter Antrieb der Antriebsmittel durch die Antriebswelle der Antriebseinrichtung.

Bei einem bevorzugten Ausführungsbeispiel ist das zweite Antriebsmittel koaxial zum ersten Antriebsmittel innerhalb des Aufnahmeraumes in der Werkzeugscheibe angeordnet. Durch eine koaxiale Anordnung des zweiten Antriebsmittels zum ersten Antriebsmittel ist ein platzsparender Aufbau erreicht.

In einem bevorzugten Ausführungsbeispiel ist die die beiden Antriebsmittel aufweisende Koppeleinrichtung an der Antriebswelle drehfest und axial verschiebbar gegenüber dieser gelagert. Durch die drehfeste Verbindung der Koppeleinrichtung mit der Antriebswelle ist die Übertragung von Drehmomenten von der Antriebseinrichtung auf die Koppeleinrichtung gewährleistet. Durch die axiale Verschiebbarkeit der Koppeleinrichtung auf der Antriebswelle ist es möglich, für den wahlweisen Antrieb der Werkzeugscheibe oder des Bearbeitungswerkzeuges jeweils zugeordnete axiale Positionen der Koppeleinrichtung vorzusehen.

Bei einem bevorzugten Ausführungsbeispiel besteht die Betätigungseinrichtung der Koppeleinrichtung aus einem hydraulischen Zylinder, der zumindest abschnittsweise von der Antriebswelle umfasst ist und im betätigten Zustand die Antriebsmittel innerhalb des Aufnahmeraumes in Richtung der Abtriebswelle des anzutreibenden Bearbeitungswerkzeuges zustellt und im nicht betätigten Zustand in entgegengesetzter Richtung für den Schwenkantrieb der Werkzeugscheibe zustellt. Die Realisierung der Betätigungseinrichtung mittels eines hydraulischen Zylinders unterstützt eine kompakte Bauweise. Auch ist durch diese Anordnung gewährleistet, dass für die zylinderförmig ausgeführten Antriebsmittel auf diese von dem hydraulischen Zylinder ringförmig eine gleich verteilte Zustellkraft aufgebracht werden kann, so dass ein Verkanten oder Hemmen des Antriebsmittels beim Zustellvorgang längs der Antriebswelle weitgehend ausgeschlossen ist.

Bei einem bevorzugten Ausführungsbeispiel ist vorgesehen, dass mittels einer Verriegelungseinrichtung die Werkzeugscheibe in ihren vorgebbaren Schwenkstellungen gegenüber der Trägersäule definiert festlegbar ist. Eine definierte Festlegung in vorgebbaren Schwenkstellungen ist für eine hochpräzise Bearbeitung von Werkstücken unerlässlich, da beispielsweise bei der spanenden Bearbeitung sehr hohe Kräfte an dem Bearbeitungswerkzeug auftreten können. Selbst bei derartigen Belastungen verbleibt das Bearbeitungswerkzeug, welches mittels der Halteeinrichtung an der Werkzeugscheibe festgelegt ist, dank der Verriegelungseinrichtung stabil in seiner vorgesehenen Position. In besonders vorteilhafter Weise kann für die Verriegelungseinrichtung eine sogenannte Hirth-Verzahnung vorgesehen sein, die bei einer sehr stabilen Verriegelung im verriegelten Zustand ein dennoch hinreichend hoch auflösendes Verschwenken der Werkzeugscheibe erlaubt.

Im Hinblick auf eine besonders kompakte Bauweise der Trägersäule kann die Anordnung so getroffen sein, dass sich koaxial zueinander entlang der Trägersäule erstreckende Hohlwellen die Antriebswelle und die Abtriebswelle des Wolfrom-Planetengetriebes bilden, das sich in einem Abstand von der Werkzeugscheibe befindet.

Nachstehend ist die Erfindung anhand eines in der Zeichnung dargestellten Ausführungsbeispieles im Einzelnen erläutert. Es zeigen:
- Fig. 1A und 1B: einen Zentralschnitt des Ausführungsbeispieles des Werkzeugrevolvers wobei in Fig. 1A der Bereich der Werkzeugscheibe mit anschließendem Teil der Trägersäule und in Fig. 1B der restliche Abschnitt der Trägersäule dargestellt sind;

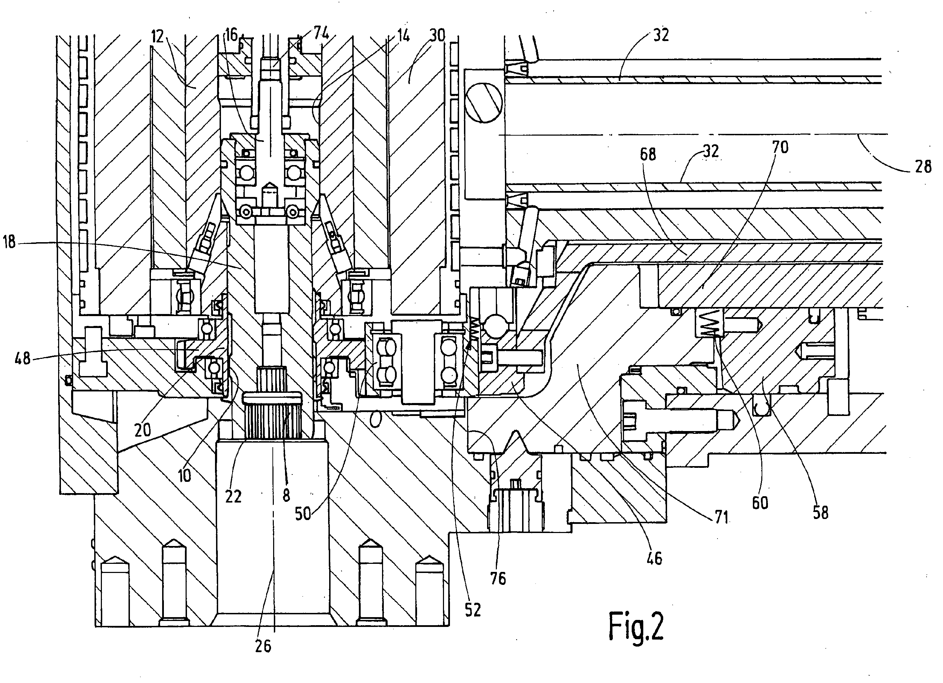

- Fig. 2: eine gegenüber Fig. 1 leicht vergrößert gezeichnete Schnittdarstellung lediglich des der Halteeinrichtung eines Bearbeitungswerkzeuges zugewandten Teiles der Werkzeugscheibe mit angrenzender Trägersäule, wobei der Betriebszustand des aktivierten Schwenkantriebes der Werkzeugscheibe gezeigt ist, und
- Fig. 3: eine perspektivische Teilansicht, teilweise aufgeschnitten, der Werkzeugscheibe, wobei der Betriebszustand des aktivierten Schwenkantriebes dargestellt ist.

Bei dem in den Fig. dargestellten Ausführungsbeispiel des Werkzeugrevolvers 4 ist eine Antriebseinrichtung 14 für den wahlweisen Schwenkantrieb einer Werkzeugscheibe 2 und den rotatorischen Antrieb mindestens eines Bearbeitungswerkzeuges (nicht dargestellt) vorgesehen, das mittels einer Halteeinrichtung 6 an der Werkzeugscheibe 2 festlegbar ist. Der Antrieb erfolgt mittels zweier Antriebsmittel 8, 10, die von der gemeinsamen, eine Antriebswelle 12 aufweisenden Antriebseinrichtung 14 antreibbar sind. Die Antriebsmittel 8, 10 sind über eine jeweils von mindestens einer Betätigungseinrichtung 16 ansteuerbaren Koppeleinrichtung 18 mit Abtriebsmitteln 20, 22 verbindbar. Hierbei dient das Abtriebsmittel 20 dem Antrieb der Werkzeugscheibe 2, während das Abtriebsmittel 22 dem Antrieb des Bearbeitungswerkzeuges dient. Die Antriebseinrichtung 14 ist zusammen mit den Antriebsmitteln 8, 10 und den dem Antrieb des Bearbeitungswerkzeuges dienenden Abtriebsmitteln 22 zur Gänze innerhalb der Werkzeugscheibe 2 angeordnet, während die dem Schwenkantrieb der Werkzeugscheibe 2 dienenden Abtriebsmittel 20 nicht unmittelbar, d. h. innerhalb der Werkzeugscheibe 2, mit dieser in Antriebsverbindung sind, sondern mit der Werkzeugscheibe 2 über eine außerhalb der Werkzeugscheibe 2 an der Trägersäule 32 des Werkzeugrevolvers 4 gelegene Getriebeanordnung 34 in Wirkverbindung sind. Auf diese Getriebeanordnung, die in Form eines Wolfrom-Planetengetriebes 34 ausgebildet ist und die an der die Schwenkachse der Werkzeugscheibe 2 definierenden Trägersäule 32 in einem Abstand von der Werkzeugscheibe 2 angeordnet ist, wird unten näher eingegangen. Die Antriebseinrichtung 14 ist zusammen mit den Antriebsmitteln 20, 22 innerhalb der Werkzeigscheibe 2 innerhalb eines Aufnahmeraumes 24 der Werkzeugscheibe 2 angeordnet.

Mittels der Betätigungseinrichtung 16 ist das jeweilige Antriebsmittel 8, 10 koaxial zu der Antriebswelle 12 der Antriebseinrichtung 14 angeordnet. Die die beiden Antriebsmittel 8 und 10 aufweisende Koppeleinrichtung 18 ist an der Antriebswelle 12 drehfest aber axial in Richtung der Mittenachse 26 der Koppeleinrichtung 18 gegenüber der Antriebswelle 12 verschiebbar gelagert.

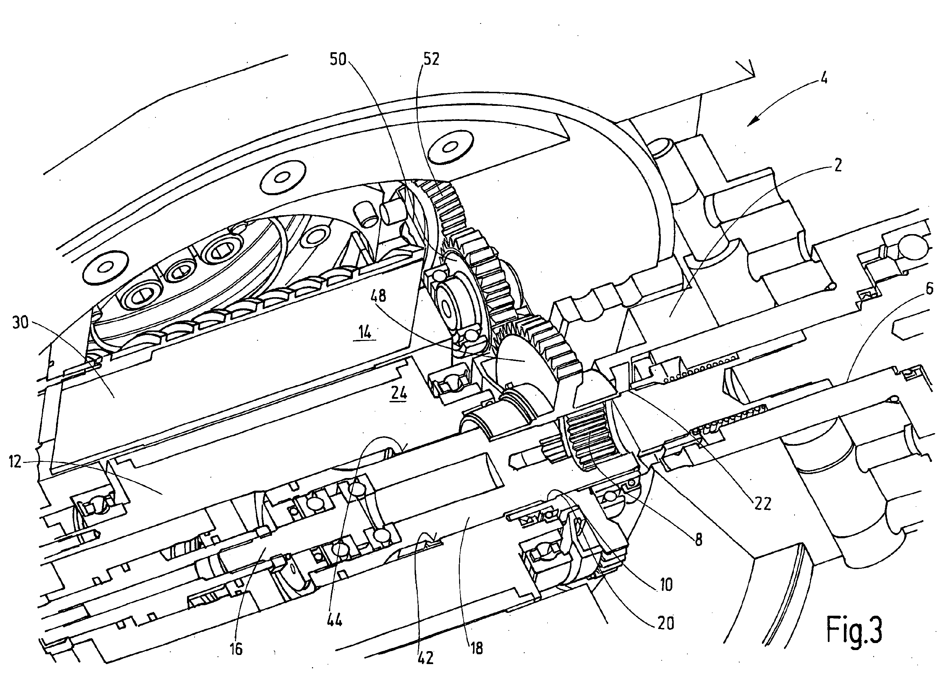

Wenn mittels der Schwenkbewegung der Werkzeugscheibe das an ihr mittels der Halteeinrichtung 6 festgelegte Bearbeitungswerkzeug um eine Schwenkachse 28 in eine Bearbeitungsposition eingestellt ist, ist die Koppeleinrichtung 18 derart betätigt, dass die Koppeleinrichtung 18 aus der in Fig. 3 gezeigten Position nach rechts zugestellt ist, um das Bearbeitungswerkzeug durch Kuppeln des Antriebsmittels 8 mit dem Abtriebsmittel 22 anzutreiben. Andererseits befindet sich die Koppeleinrichtung 18 für den Schwenkantrieb der Werkzeugscheibe 2 in der in Fig. 3 gezeigten Axialposition, die auch in den übrigen Fig. dargestellt ist. Hierbei erfolgt bei durch die Antriebseinrichtung 14 in Rotation versetzter Koppeleinrichtung 18 die Übertragung der Drehbewegung über das Antriebsmittel 10, das bei dieser Position der Koppeleinrichtung 18 mit dem Abtriebsmittel 20 in Eingriff ist, auf ein Zahnrad 48. Ein mit dem Zahnrad 48 kämmendes Zwischenzahnrad 50 setzt die Antriebsverbindung zu dem an der Trägersäule 32 angeordneten Planetengetriebe 34 fort.

Die Kraftübertragung von der Antriebswelle 12 auf die Koppeleinrichtung 18 erfolgt bei dem gezeigten Ausführungsbeispiel durch eine außenumfangsseitige Verzahnung 42 der Koppeleinrichtung 18, die in eine innenumfangsseitige Verzahnung 44 in einer Ausnehmung der Antriebswelle 12 eingreift. Für die Verschiebung der Koppeleinrichtung 18 in die jeweiligen Schalt- oder Axialpositionen weist die Betätigungseinrichtung 16 einen hydraulischen Zylinder 74 auf.

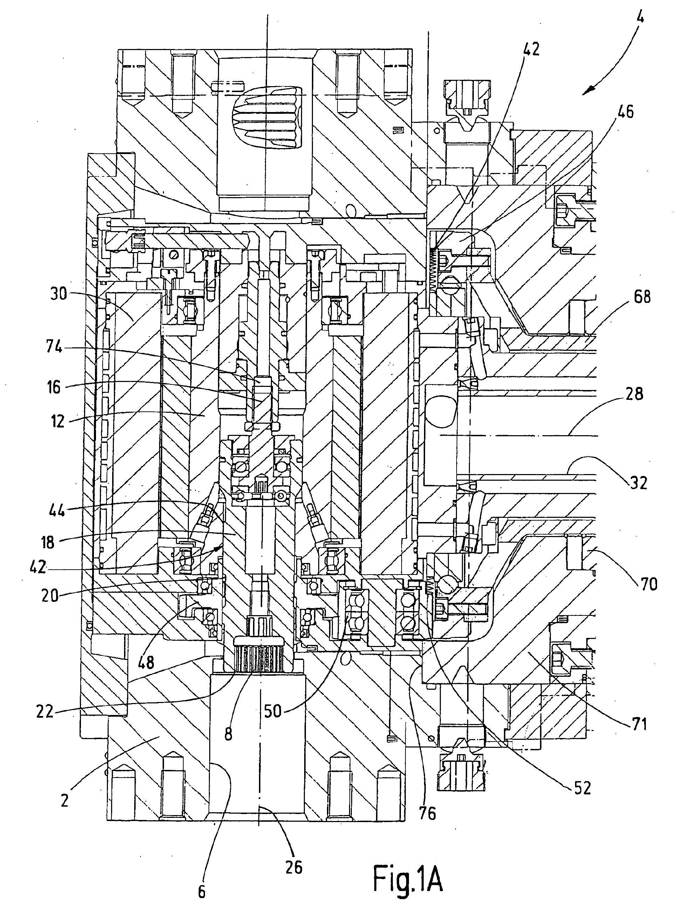

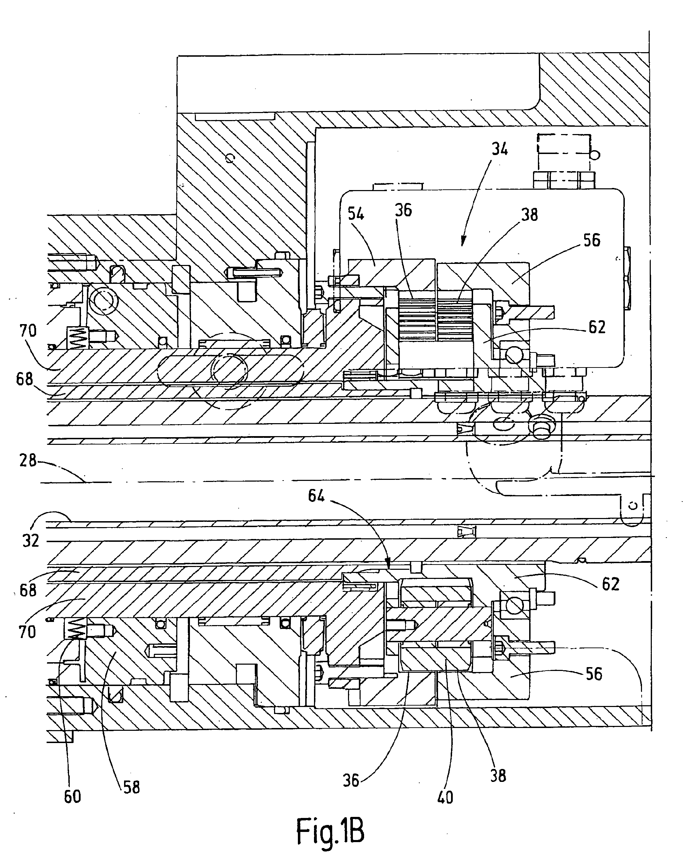

Für die Kraftübertragung auf das Planetengetriebe 34 ist das Zwischenzahnrad 50 mit einem Zahnkranz 52 in kämmendem Eingriff, der sich an einem flanschartig erweiterten Bund 46 einer Hohlwelle 68 befindet. Diese Hohlwelle 68, die die Trägersäule 32 konzentrisch umgibt, ist an ihrem von dem Bund 46 abgewandten Ende über eine Kerbverzahnung 64 (siehe Fig. 1 B) mit einem umlaufenden Gehäuseteil 62 des Planetengetriebes 34 in Antriebsverbindung, das sich innerhalb eines an der Trägersäule 32 ortsfesten Gehäuseteiles 56 befindet. Dieses definiert zusammen mit einem drehbeweglichen Gehäuseteil 54 einen Raum für zumindest ein Planetenrad 40, wobei das Gehäuseteil 54 und das Gehäuseteil 56 jeweils eine Innenverzahnung 36 bzw. 38 bilden. Diese Innenverzahnungen 36, 38, die mit dem zumindest einen Planetenrad 40 kämmen, weisen eine geringfügig unterschiedliche Zähnezahl auf, sodass entsprechend des Wolfrom-Getriebeprinzips sich für das drehbare Gehäuseteil 54 eine weit geringere Drehzahl ergibt, verglichen mit der Eingangsdrehzahl der Hohlwelle 68.

Das umlaufende Gehäuseteil 54 ist mit der abtriebsseitigen Hohlwelle 70 verbunden, die die eingangsseitige Hohlwelle 68 koaxial umgibt. Die mit der stark untersetzten Drehzahl antreibbare Hohlwelle 70 ihrerseits ist mit einer Aufnahmescheibe 71 fest verbunden. Diese ist an ihrem der Werkzeugscheibe 2 zugewandten Ende 76 mit der Werkzeugscheibe 2 verbunden, um für diese den Schwenkantrieb zu bilden. Um die Werkzeugscheibe 2 in der jeweils definierten Schwenkposition formschlüssig zu verriegeln, ist eine Verriegelungseinrichtung 58 in Form eines Riegelkörpers vorgesehen, der hydraulisch verschiebbar ist, um eine zwischen Verriegelungskörper und Aufnahmescheibe 71 vorgesehene Hirth-Verzahnung 60 in und außer Eingriff zu bringen.

## Patentansprüche

1. Werkzeugrevolver mit einer Werkzeugscheibe (2), die um eine eine Schwenkachse (26) definierende Trägersäule (32) in Positionen schwenkbar ist, in denen mindestens ein an der Werkzeugscheibe (2) festlegbares Bearbeitungswerkzeug in einer Bearbeitungsposition ist, mit einer Antriebseinrichtung (14), deren Antriebsmittel (8, 10) über eine ansteuerbare Koppeleinrichtung (18) mit Abtriebsmitteln (20, 22) verbindbar sind, die dem Antrieb der Werkzeugscheibe (2) oder des Bearbeitungswerkzeuges dienen, **dadurch gekennzeichnet, dass** die Antriebseinrichtung (14) zusammen mit den Antriebsmitteln (8, 10) und den dem Antrieb des Bearbeitungswerkzeuges dienenden Abtriebsmitteln (22) innerhalb der Werkzeugscheibe (2) angeordnet sind und dass die dem Schwenkantrieb der Werkzeugscheibe (2) dienenden Abtriebsmittel eine außerhalb der Werkzeugscheibe (2) an der Trägersäule (32) gelegene Getriebeanordnung (34) mit einer sich entlang der Trägersäule (32) erstreckenden Abtriebswelle (70) aufweisen.

2. Werkzeugrevolver nach Anspruch 1, **dadurch gekennzeichnet, dass** die Getriebeanordnung ein Wolfrom-Planetengetriebe (34) aufweist.

3. Werkzeugrevolver nach Anspruch 1 oder 2, **dadurch gekennzeichnet, dass** die Antriebsmittel (8, 10) von einer gemeinsamen Antriebswelle (12) der Antriebseinrichtung (14) antreibbar sind.

4. Werkzeugrevolver nach einem der Ansprüche 1 bis 3, **dadurch gekennzeichnet, dass** die Koppeleinrichtung (18) durch eine Bestätigungseinrichtung (16) ansteuerbar ist, mittels deren das jeweilige Antriebsmittel (8, 10) koaxial zur Antriebswelle (12) der Antriebseinrichtung (14) oder parallel zu dieser verschiebbar ist.

5. Werkzeugrevolver nach Anspruch 4, **dadurch gekennzeichnet, dass** das zweite Antriebsmittel (10) koaxial zum ersten Antriebsmittel (8) innerhalb des Aufnahmeraumes (24) in der Werkzeugscheibe (2) angeordnet ist.

6. Werkzeugrevolver nach Anspruch 5, **dadurch gekennzeichnet, dass** die die beiden Antriebsmittel (8, 10) aufweisende Koppeleinrichtung (18) an der Antriebswelle (12) drehfest und axial verschiebbar gegenüber dieser gelagert ist.

7. Werkzeugrevolver nach einem der Ansprüche 1 bis 6, **dadurch gekennzeichnet, dass** eine Betätigungseinrichtung (16) der Koppeleinrichtung (18) aus einem hydraulischen Zylinder besteht, der zumindest abschnittsweise von der Antriebswelle (12) umfasst ist und im betätigten Zustand die Antriebsmittel (8, 10) innerhalb des Aufnahmeraumes (24) in Richtung der Abtriebsmittel (22) des anzutreibenden Bearbeitungswerkzeuges zustellt und im nicht betätigten Zustand in entgegengesetzter Richtung für den Schwenkantrieb der Werkzeugscheibe (2) zustellt.

8. Werkzeugrevolver nach einem der Ansprüche 1 bis 7, **dadurch gekennzeichnet, dass** mittels einer Verriegelungseinrichtung (58) die Werkzeugscheibe (2) in ihren vorgebbaren Schwenkstellungen gegenüber der Trägersäule (32) definiert festlegbar ist.

9. Werkzeugrevolver nach einem der Ansprüche 2 bis 8, **dadurch gekennzeichnet, dass** sich koaxial zueinander entlang der Trägersäule (32) erstreckende Hohlwellen (68, 70) die Antriebswelle und die Abtriebswelle des Wolfrom-Planetengetriebes (34) bilden, das sich in einem Abstand von der Werkzeugscheibe (2) befindet.

## Claims

1. A tool turret comprising a tool disc (2) which can be swivelled around a support column (32) defining a swivel axis (26) into positions in which at least one machining tool that can be fastened to the tool disc (2) is in a machining position, and comprising a drive device (14) the drive means (8, 10) of which can be connected by means of a controllable coupling device (18) to drive means (22) serving to drive the tool disc (2) or the machining tool, **characterised in that** the drive device (14) together with the drive means (8, 10) and the output means (22) serving to drive the machining tool are arranged within the tool disc (2) and that the drive means serving to drive the tool disc (2) in a swivelling manner have a gearing mechanism arrangement (34) located outside of the tool disc (2) on the support column (32) with an output shaft (70) extending along the support column (32).

2. The tool turret according to Claim 1, **characterised in that** the gearing mechanism arrangement comprises a Wolfrom planetary gear (34).

3. The tool turret according to Claim 1 or 2, **characterised in that** the drive means (8, 10) can be driven by a common drive shaft (12) of the drive device (14).

4. The tool turret according to any of Claims 1 to 3, **characterised in that** the coupling device (18) can be controlled by an actuating device (16), by means of which the respective drive means (8, 10) can be displaced coaxially to the drive shaft (12) of the drive device (14) or parallel to the latter.

5. The tool turret according to Claim 4, **characterised in that** the second drive means (10) is arranged coaxially to the first drive means (8) within the receiving space (24) in the tool disc (2).

6. The tool turret according to Claim 5, **characterised in that** the coupling device (18) comprising the two drive means (8, 10) is mounted on the drive shaft (12) in a rotatably fixed manner and can be displaced axially relative to the latter.

7. The tool turret according to any of Claims 1 to 6, **characterised in that** an actuating device (16) of the coupling device (18) consists of a hydraulic cylinder which is surrounded at least in sections by the drive shaft (12) and in the actuated state feeds the drive means (8, 10) within the receiving space (24) in the direction of the output means (22) of the machining tool to be driven and in the non-actuated state feeds in the opposite direction for the swivel drive of the tool disc (2).

8. The tool turret according to any of Claims 1 to 7, **characterised in that** the tool disc (2) can be secured in a defined manner in its pre-definable swivel positions relative to the support column (32) by means of a locking device (58).

9. The tool turret according to any of Claims 2 to 8, **characterised in that** hollow shafts (68, 70) extending coaxially to each other along the support column (32) form the drive shaft and the output shaft of the Wolfrom planetary gear (34) that is located a distance away from the tool disc (2).

## Revendications

1. Tourelle revolver ayant un disque (2) d'outil, qui peut pivoter autour d'une colonne (32) de support définissant un axe (26) de pivotement, dans des positions dans lesquelles au moins un outil d'usinage pouvant être fixé au disque (2) d'outil est dans une position d'usinage, comprenant un dispositif (14) d'entraînement, dont les moyens (8, 10) menant peuvent, par un dispositif (18) d'accouplement pouvant être commandé, être reliés à des moyens (20, 22) menés qui servent à entraîner le disque (2) ou l'outil d'usinage, **caractérisée en ce que** le dispositif (14) d'entraînement est, ensemble avec les moyens (8, 10) menant et les moyens (22) menés servant à l'entraînement de l'outil d'usinage, disposé à l'intérieur du disque (2) d'outil et **en ce que** les moyens menés servant à l'entraînement en pivotement du disque (2) d'outil, ont un agencement (34) d'engrenage mis sur la colonne (32) de support à l'extérieur du disque (2) d'outil en ayant un arbre (70) mené s'étendant le long de la colonne (32) de support.

2. Tourelle revolver suivant la revendication 1, **caractérisée en ce que** l'agencement d'engrenage a un engrenage (34) satellite Wolfrom.

3. Tourelle revolver suivant la revendication 1 ou 2, **caractérisé en ce que** les moyens (8, 10) d'entraînement peuvent être entraînés par un arbre (12) d'entraînement commun du dispositif (14) d'entraînement.

4. Tourelle revolver suivant la revendication 1 à 3, **caractérisée en ce que** le dispositif (18) d'accouplement peut être commandé par un dispositif (16) d'actionnement au moyen duquel le moyen (8, 10) d'entraînement respectif peut être déplacé coaxialement à l'arbre (12) d'entraînement du dispositif (14) d'entraînement ou parallèlement à celui-ci.

5. Tourelle revolver suivant la revendication 4, **caractérisée en ce que** le deuxième moyen (10) d'entraînement est disposé coaxialement au premier moyen (8) d'entraînement à l'intérieur de la chambre (24) de réception dans le disque (2) d'outil.

6. Tourelle revolver suivant la revendication 5, **caractérisée en ce que** le dispositif (18) d'accouplement ayant les deux moyens (8, 10) d'entraînement est monté solidaire en rotation de l'arbre (12) d'entraînement et avec possibilité de se déplacer axialement par rapport à celui-ci.

7. Tourelle revolver suivant l'une des revendications 1 à 6, **caractérisée en ce qu'**un dispositif (16) d'actionnement du dispositif (18) d'accouplement est constitué d'un cylindre hydraulique qui, au moins par tronçon, est entouré de l'arbre (12) d'entraînement et qui, lorsqu'il est actionné, fait avancer les moyens (8, 10) d'entraînement à l'intérieur de la chambre (24) de réception dans la direction des moyens (22) menés de l'outil d'usinage à entraîner et qui, lorsqu'il n'est pas actionné, les fait avancer dans le sens contraire pour l'entraînement en pivotement du disque (2).

8. Tourelle revolver suivant l'une des revendications 1 à 7, **caractérisée en ce qu'**au moyen d'un dispositif (58) de verrouillage, le disque (2) d'outil peut être fixé d'une manière définie par rapport à la colonne (32) de support dans ses positions de pivotement pouvant être données à l'avance.

9. Tourelle revolver suivant l'une des revendications 2 à 8, **caractérisée en ce que** des arbres (68, 70) creux, s'étendant coaxialement l'un à l'autre le long de la colonne (32) de support, forment l'arbre d'entraînement et l'arbre mené de l'engrenage (34) satellite Wolfrom, qui se trouve à distance du disque (2) d'outil.
